# EUROPEAN PATENT SPECIFICATION

(11) **EP 1 165 199 B1**
(45) Date of publication and mention of the grant of the patent: **03.08.2005**
(21) Application number: 00911030.5
(22) Date of filing: 13.03.2000
(51) Int. Cl.: B01D 11/02, E21B 21/06, B01F 17/00

(54) **A METHOD FOR THE EXTRACTION OF OIL BY MICROEMULSIFICATION**
METHODE FÜR DIE EXTRAKTION VON ÖL DURCH MIKROEMULGIERUNG
PROCEDE D'EXTRACTION D'HUILE PAR MICROEMULSIFICATION

(30) Priority: 12.03.1999 GB 9905668
(43) Date of publication of application: 02.01.2002
(73) Proprietor: Surfactant Technologies Limited, Edinburgh EH3 7TH (GB)
(72) Inventor: Oldfield, Christopher, Haddington, East Lothian EH41 38D (GB)
(74) Representative: Gordon, Naoise Padhraic Edward
(86) International application number: PCT/GB2000/000841
(87) International publication number: WO 2000/054868

(56) References cited:
- EP-A- 0 383 522
- EP-A- 0 450 539
- WO-A-99/05392
- US-A- 4 645 608

## Description

This invention relates to a method for the extraction of oil by microemulsification and in particular to a method for the extraction of contaminating oil from solids such as waste drilling muds.

Drilling muds are used as lubricants and stabilisers in the drilling of wells as part of the oil winning operation. There are a large number of different formulations, but they can be subdivided into just two groups, those based on water and those based on oil. Water based muds use water with a potassium chloride KCl) content of 75% weight (wt) and various silicates comprising 25%. Ethylene glycol is often added, together with other viscosifiers, to 3-5% wt. These closely resemble oil-based muds in terms of their measurable characteristics but in the field they are distinctly lacking in performance when compared to oil based muds. In particularly difficult drilling situations, e.g. horizontal (as opposed to vertical) drilling as practised in the North Sea, water based muds cannot be used.

Oil-based muds are superior to water-based muds and are used where drilling is difficult. For example, oil-based muds are used exclusively in North sea oil-winning operations, as a consequence of the practice of horizontal drilling.

Oil-based muds consist of an oil, which may be of mineral or synthetic origin, plus a detergent plus variable amounts of colloidal clay (e.g. bentonite). During drilling mud is pumped continuously to the drill head. The oil itself lubricates and cools the drilling bit, whilst the colloidal clays act as wall-building agents, acting to stabilise the walls of the well. Mud returning to the surface carries with it the rock cuttings, which can be shale, sandstone or limestone, depending on the character of the rock formation being drilled. At the surface, the used mud is separated into mud- and cuttings- fractions either by centrifugation or by passage through a shale-shaker (a vibrating wire mesh screen) which retains particulates of diameter >100 micrometers, approx. The mud fraction is recycled. The cuttings fraction, which may contain up to 25% weight oil, is disposed of.

In the United Kingdom, The Brown Book (Department of Trade and Industry - DTI - energy report for oil and gas resources in the UK) states that roughly 350 wells are drilled in the North Sea every year and each produces an average of 300 tonnes of waste drilling mud. Accordingly, it can be estimated that 105,000 tonnes of waste drilling mud are produced each year and around 20,000 tones of drill cuttings are brought ashore per annum for treatment.

Disposal of cuttings fraction causes problems. For example, historically, in the North Sea, the cuttings fraction has been dumped overboard, where it has accumulated in piles at the base on the drilling platform. The UKOOA (UK Offshore Operators Association) estimates that to date between 1 and 1.5 million tonnes of cuttings currently lie on the sea bed in the central and northern UK Continental Shelf (UKCS) containing almost 70,000 tonnes of oil. Although this practice dates back to the beginnings of North Sea oil-winning operations, recent research has shown that the material has a severe destabilising effect on the benthic ecosystem due to the slow leaching of hydrocarbons from the piles into the ocean environment. Contrary to prior expectation, biodegradation of the hydrocarbon fraction within the piles does not occur, and it is now clear that this is due to the anaerobic nature of the piles; biodegradation of hydrocarbons is a strictly oxygen-requiring (aerobic) process.

The UKOOA has categorised the effects on the benthic environment into four zones as follows:
1 Within the pile, typically with a footprint up to 50m, the natural fauna is absent. Recent studies have discovered unusual species, normally found around hydrothermal vents and natural oil seeps, which have colonised cutting piles.
2 Typically, within 500m of the installation there is an area of impoverished and highly modified biological communities, characterised by "opportunist" species which can exploit these conditions.
3 A "transition zone" within which the biological communities return to normal, usually within 2km of the installation.
4 A wider area within which chemical contamination can be detected, although biological communities appear normal.

As a consequence new legislation, limiting the oil-content of cuttings dumped overboard to a maximum of 1% wt (OSPAR Commission - Paris Commission Decision 92/2) was introduced in 1996. It was also decided that whole oil based muds should not be dumped or discharged at sea.

Until the present time, a convenient rig-based technology to achieve this does not exist. Current remediation practices involve shipping the cuttings fraction for treatment on-shore. These treatments can be summarised as follows:
Land-farming: Land-farming is practised in countries such as Canada and Norway. Natural microbial action in the aerobic terrestrial environment leads to the oxidation of residual hydrocarbon to carbon dioxide (and water). This is a slow, land-intensive process and is not an option for densely-populated countries such as the UK.
Incineration: The possibility of high-temperature incineration has been investigated in the past. Incineration requires maintenance of extremely high temperatures (up to around 750°C) in order to ensure complete combustion and is correspondingly power-intensive. As a consequence incineration is not regarded as economical.
Distillation: The cuttings are heated in an oven to around 350°C removing oil to around 0.5% by weight. This is currently the most viable technology with three - plants operating in the UK, together treating most of the 20,000 tonnes brought ashore. The process is nevertheless energy intensive.
Solvent-extraction: This process is a modification of distillation involving mixing of the waste with an hydrocarbon solvent followed by the removal of the hydrocarbon mixture by distillation. The process is energy intensive and utilises considerable volumes of organic solvent.
Microwave Assisted Processes: Microwave-assisted extraction is a modification of the solvent extraction process. Solvents in contact with a solid sample are exposed to microwave energy to partition compounds from the sample matrix into the solvent. The technology is a direct descendent of closed-vessel microwave acid digestions and solvent extractions. The two concepts have been united, with the kinetics driven by elevated temperatures and enabling extractions with reduced volumes of solvent. Again this system is power and energy intensive and is not regarded as economical.

Rig-based processing is desirable over land based processing because it eliminates the costs associated with transport to shore, since cleaned cuttings may be disposed of. A viable rig-based technology for cuttings remediation must reduce the residual hydrocarbon (oil) content below 1% weight. The infrastructure to support it must also conform to size, weight- and power-requirements, and safety considerations, commensurate with rig-operation. For these reasons none of the process options listed above are transferable to the rig environment.

The application of microemulsion systems for the remediation of waste drilling muds is already known in the art. WO 99/05392 teaches that treatment of waste drilling mud samples with a water-in-oil (w/o) microemulsion preparation can reduce the residual oil content to 3% wt.

The use of microemulsions is known in tertiary oil recovery. In tertiary oil recovery, surfactant are introduced to generate ultralow surface tensions to displace oil from solid rock capillaries in nearly-exhausted oil-wells. The surfactants are not employed to remove contaminating oil from aggregate or solide phases such as waste drilling muds. In tertiary oil recovery, the oil is ultimately recovered as a water-in-oil microemulsion. Similarly, microemulsions are also employed in another subterranean application for the extraction of tar sand.

An object of the invention is to overcome the problems of the prior art.

A further object of the invention is to provide a method for the extraction of contaminating oil from solids such as waste drilling muds.

According to the invention there is provided a method for the extraction of oil from waste drilling mud or waste drill mud cuttings comprising an oil fraction and a particulate fraction comprising mixing the waste drill mud cuttings with a water-based solution of a surfactant, absorbing the oil fraction from the particulate fraction with the surfactant, forming a single-phase Winsor IV oil-in-water (o/w) microemulsion from the surfactant and the oil fraction and separating the single phase Windsor IV o/w microemulsion and the particulate fraction.

A surfactant suitable for use in the method of the invention has the general formula: 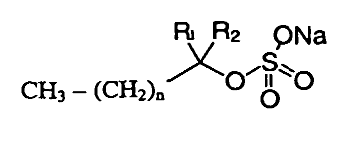 wherein
R₁ = -H or -CH₃
R₂ = 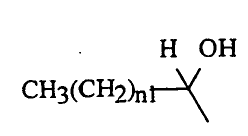 where n1 may take any value as long as, n1 < n
R₁ = R₂ = 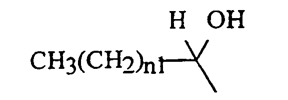 where n1 may take any value as long as n1 < n, or
R₁ = -H or -CH₃
R₂ = 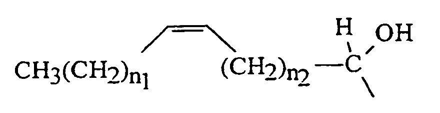 where n1 and n2 may take any value, as long as (n1 + n2) < n, or
R₁ = R₂ = 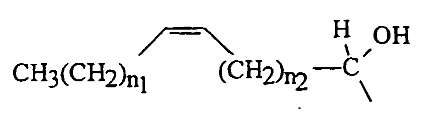 where n1 and n2 may take any value, as long as (n1 + n2) < n

Surprisingly, the applicants have found that the oil-in-water microemulsion phase in a microemulsion facilitates the highly effective extraction of oil from oil contaminated solids. Extraction can be achieved to levels below 1% which provides a significantly greater efficacy than that which could be achieved with water-in-oil microemulsions or by continuous rounds. Similarly, such levels of efficiency cannot be achieved with conventional emulsions.
The use of the oil-in-water phase within oil/water systems facilitates the encapsulation of oil within the system by the surfactant to eliminate contact between the solid surface of the solid phase and the oil to facilitate extractions of the oil. Accordingly, although the applicants do not wish to be bound by a theoreom, it is believed that encapsulation of the oil as opposed to mere reduction in surface tension facilitates highly efficient extractions in accordance with the method of the present invention.

The method of the present invention therefore facilitates efficient extraction of oil employing oil-in-water microemulsions by ensuring that extraction is effected in the oil-in-water microemulsion phases of the oil/water system.

For example, the applicants have found that where extractions are attempted in the bicontinuous realm of the system, oil within the system is re-exposed to solids thereby preventing extraction.

As will be appreciated by those skilled in the art, the oil-in-water microemulsion extraction is controllable by adjusting the ratios of water: oil: surfactant and, if necessary, co-surfactant and flocculant as required. The ratios can be determined by assessing the oil content of the material to be extracted and adjusting the relative proportions of the components of the oil-in-water system to ensure that extraction is effected in oil-in-water microemulsion phase.

This invention therefore provides a method for the remediation of waste drilling muds generated during oil-winning operations. The process of the invention relates to the removal of the oil from the particulate solid fraction. The residual oil content of the solids can be reduced to less than 1% by weight. Accordingly, the solids treated according to the method of the invention can be rendered harmless and can be disposed of by dumping at sea or land-filling. As described further below, solids such as waste muds treated in accordance with the method of the invention are treated with an aqueous surfactant solution such that the oil is extracted as an oil-in-water (o/w) microemulsion.

The invention provides a method for the removal of the oil-component from cuttings which can be adapted for use in the rig environment, and hence permit direct overboard dumping of the cuttings. The process of the invention can be adapted for the on or offshore treatment of cuttings recovered from the sea bed.

Herein is described a process for the extraction of oils from oil-contaminated solids, including waste drill mud cuttings. The method involves washing the cuttings at ambient temperature with an aqueous solution of a surfactant solution, the surfactant being one of the set of so-called microemulsion-forming surfactants. Specifically, the detergent preparations used in this process are capable of spontaneously absorbing oils, forming so called oil-in-water (o/w) microemulsions.
An oil-in-water microemulsion is defined as a thermodynamically stable, single-phase mixture of oil, water and surfactant, such that the continuous phase is water (which may contain dissolved salts) and the dispersed phase consists of a monodispersion of oil droplets, each coated with a close-packed monolayer of surfactant molecules. The inherent thermodynamic stability arises from the fact that, due to the presence of the surfactant monolayer, there is no direct oil-water contact. Oil-in-water microemulsions are often optically transparent.

The formation of an oil-in-water microemulsion is critical to the present invention. A fundamental distinction exists between microemulsions and ordinary emulsions. Emulsions and microemulsions are similar only in the superficial sense that they can be described as mixtures of oil, water and an amphipathic substance, usually called a surfactant.

Microemulsions by definition are thermodynamically stable, that is, for a particular composition (type and amount of each component), and a particular temperature, the microemulsion regimen is preferred over a system of separate phases of oil, water and surfactant. The corollary of this argument is that microemulsions form spontaneously when their constituents are mixed together. Once formed, microemulsions remain so (characterised macroscopically as transparent single phases), unless some property is changed. For example, increasing or decreasing the temperature beyond certain limits, leads to phase separation.

Emulsions, by contrast, are not thermodynamically stable. Emulsions form only by input of mechanical energy (e.g. by shaking or sonication), and the emulsion regimen can only be maintained by continuous input of energy; when energy input is withdrawn the emulsion phase separates, yielding distinct oil- and water phases (the surfactant is distributed between the two phases, or sometimes exists as a third phase).

There is no temperature at which such systems form microemulsions.

Microemulsions form because the surfactants form a close-packed monolayer at the oil-water interface, which effectively excludes direct oil-water contact. The corollary of this argument is that surfactants may not stabilise microemulsions if they cannot saturate an oil-water interface. Typically, these surfactants only partially coat the interface, leaving uncoated areas exposed to bulk continuous phase solvent.

For example, water-continuous emulsions typically consist of oil droplets only partially covered with surfactant; the uncoated surfaces are therefore directly exposed to the continuous aqueous phase. This is thermodynamically unfavourable; droplets aggregate by coalescing at their exposed surfaces, increasing the surface area : volume ratio and hence mininising oil : water contact. The outcome of extensive droplet coalescence is bulk-phase separation. In microemulsions there are no uncoated surfaces; therefore there is no driving force for phase-separation.

The rate of phase separation of an emulsion can actually be relatively slow; emulsions can be created which only completely phase separate after several weeks. Nevertheless the fundamental distinction between emulsions and microemulsions remains. Indeed, the interesting properties of microemulsions, both in general and in the context of the specific application described here, arises from the thermodynamic properties arising from total oil:water exclusion arising from interfacial close-packing of surfactants.

Apparent from gross physical differences, which can be determined by visual examination (microemulsions show no tendency to phase separate and are usually transparent, whereas emulsions are opalescent or turbid and inevitably phase-separate), the two can be distinguished by measuring the surface tension and the oil-water interface. The surface tension at plain oil-water interfaces is typically of the order of 50 mNm-1. Emulsions formed by mixing oil water and an "ordinary" (i.e. non-microemulsion-forming) surfactant are typically characterised by surface tensions of the order of 0.1 - 1 mM m-1, whereas microemulsions are characterised by far lower surface tensions - of the order of 10-3 - 10-6 mN m-1. These latter values reflecting the absence of direct oil-water contact.

The present invention exploits microemulsions. In particular, the invention exploits the feature whereby as an aqueous solution of an o/w microemulsion-forming surfactant can absorb oil from a bulk oil phase, forming an o/w microemulsion, so can the same solution absorb oil from an oil-coated solid surface with the same result. Furthermore, in the oil-in-water microemulsion environment, the oil is effectively encapsulated within the surfactant shell, and no longer in direct contact with the original solid. The o/w microemulsion can separated from the cleaned, oil-free solids by straightforward physical means (filtration, centrifugation).

Various embodiments of the invention will now be described by way of example only, having regard to the following drawings and non-limiting examples in which:
Figure 1 (a) is a pseudoternary phase diagram of (SDS + B ratio, 1:1 by weight) 0.5M NaCl and Novatec Base Fluid at 25° Celsius;
Figure 1 (b) is a pseudoternary phase diagram (SDS + B, ratio, 1:1 by weight) 0.5M NaCl and Novatec Base Fluid at 5° Celsius;
Figure 1 (c) is a pseudoternary phase diagram (SDS + B, ratio 1:2 by weight) 0.5M NaCl and Novatec Base Fluid at 25° Celsius;
Figure 1 (d) is a pseudoternary phase diagram (SDS + B, ratio 1:2 by weight) 0.5M NaCl Base Fluid at 5° Celsius;
Figure 2 is a diagram of conductivity of the system versus water : oil ratio for the (SDS/B)/water/Novatec Base Oil System at 25° Celsius with the (SDS + B): water ratio held at 1:1 (weight);
Figure 3 is a schematic diagram of the treatment pathways for two waste drill mud samples, and
Figure 4 is a generic structure of alkyl sulphate surfactants with oil/water microemulsion forming potential with representative identities for R₁ and R₂.

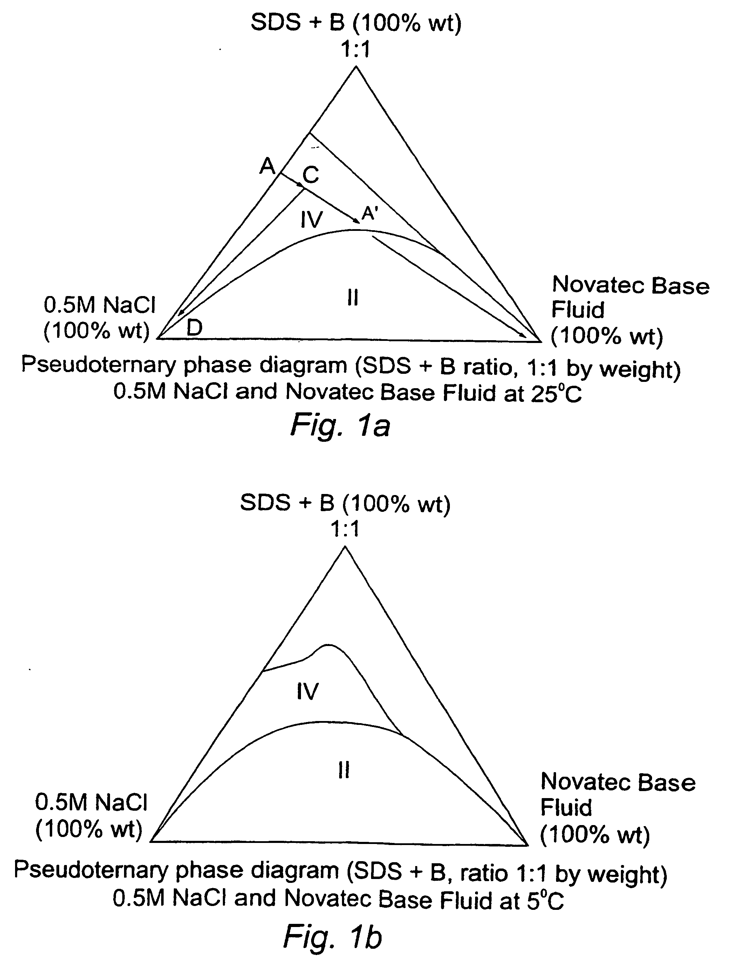

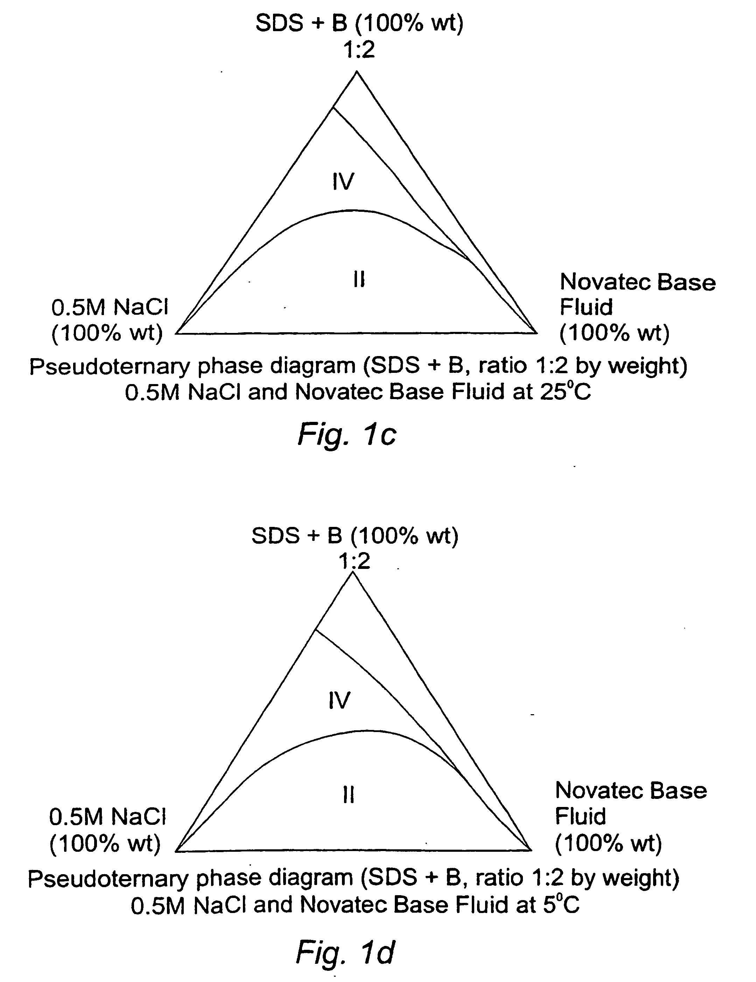

As shown in the drawings, surfactant behaviour can be quantified in terms of a triangular phase diagram. The phase diagram for the system water/(SDS+B)/oil is shown in Figure 1(a). Here, (SDS+B) is a mixture of the surfactant sodium dodecyl sulphate (SDS) and butan 1-ol(B). B acts as a cosurfactant, enhancing the O/W microemulsion-forming properties of SDS. As long as the SDS and B are held at constant ratio, they can be treated as a single component for the purpose of constructing the phase diagram. The phase diagrams in Figures 1(a)-1(d) were constructed with the SDS: B ratios held at 1:1 and 1:2 by weight at 25 and 5°C respectively. The oil employed was-Novatec B C14-C16 LAO Base Fluid (Trade Mark) (M-I Drilling Fluids UK Ltd), a typical base fluid used in the preparation of oil based drilling muds.

The apexes of the phase triangle each correspond to one of the components in pure form-oil, water, or SDS+B at the stated ratio. Any point on one of the vertices corresponds to a mixture of two of those components in defined ratio (given in percent weight; %wt).

Thus point A on the water-surfactant axis in Figure 1(a) corresponded to a system containing water and (SDS+B) in 40:60 wt% ratio. Any point within the triangle corresponded to a mixture of the three components in defined ratio.

The physical state of the mixture at equilibrium was mapped on to the phase diagram. The phase triangle in Figure 1(a) was characterised by the prominent single phase microemulsion region, IV, which extends from the SDS+B/water axis towards the SDS+B/oil axis. Most notably, for this system, region IV extended deep into the water-corner of the diagram. This property was extremely useful for the application described here. Adjacent to IV is the large region II, which corresponds to an equilibrium two-phase region, where one phase was oil-continuous (w/o) microemulsion and the other phase was water.

Within the Winsor IV realm, in moving leftwards from the SDS+B/water axis to the oil corner, there was a continuous evolution of microemulsion structure: oil-in-water→bicontinuous→water-in-oil on addition with oil. This cannot be seen by visual observation (all compositions are optically transparent), but is revealed by physical measurements, e.g. conductivity.

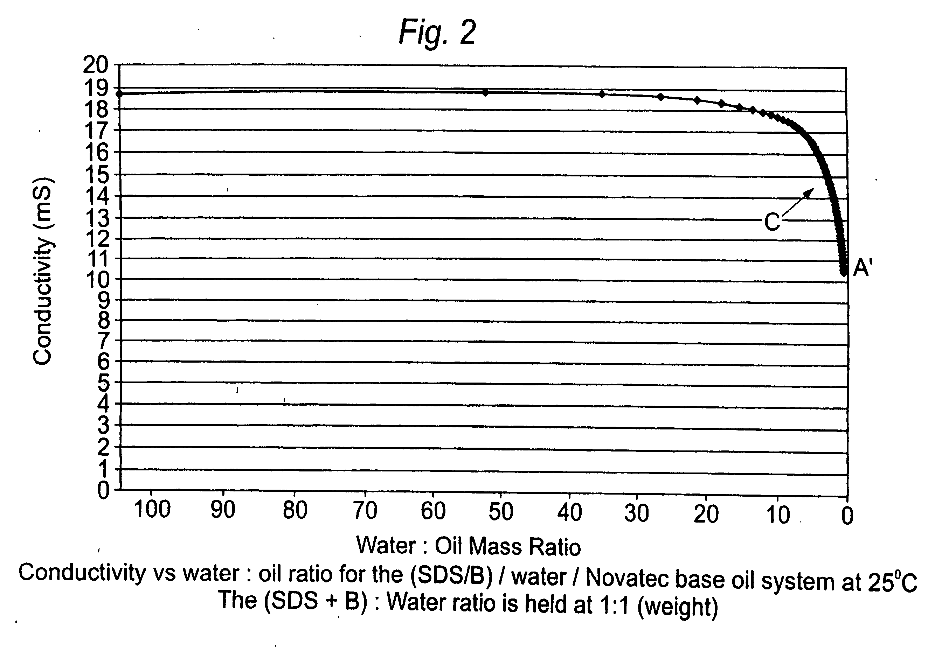

The plot of conductivity vs water: oil ratio at fixed 40:60% wt SDS+B (corresponding to the line A-A') in Figure 1(a), is shown in Figure 2. It should be noted that oil-in water microemulsions are highly conducting; water-in-oil microemulsions are poor conductors and bicontinuous systems display intermediate conductivity.

It can be seen from Figure 2 that oil in water (O/W) microemulsion type extended well into the centre of region IV in the phase diagram (point C in Figure 1(a) and Figure 2).

The method of the invention exploits the ability of water/(SDS+B) mixtures to spontaneously absorb oil from the drill cuttings preparations to form an o/w microemulsions. In accordance with the invention, the capacity of a given preparation for oil roughly corresponds to that corresponding to a final composition on the edge of the oil-in-water realm - the point C in Figures 1(a) and 2.

The method of extraction of oil can be controlled simply by placing an upper limit on the cuttings: surfactant solution (knowing the oil content of the cuttings) so avoiding inadvertent entry into the w/o microemulsion realm.

The microemulsion/cuttings mixture was easily separated by centrifugation. The recovered cutting may contain residual o/w microemulsion of composition C. This can be extracted by water-washing. Here the deep penetration of the Winsor IV realm into the water-corner, was of significance since this meant that the o/w microemulsion can be washed out simply by rinsing with water or brine; this dilution does not lead to phase separation of the residual o/w microemulsion.

To complete the extraction procedure, the cuttings recovered by centrifugation, were washed with a volume of water, so diluting the microemulsion to new composition D in Figures 1(a) and 2. The cuttings recovered by centrifugation following this washing step were virtually oil-free.

In further experiments it was found that "fines" that is, colloidal clays present either due to the presence of such materials in the original drilling mud preparation, or due to partial breakdown of the drill cuttings, could be straightforwardly flocculated by the addition of a commercially available flocculating agent such as one of the Alcomer®, Magnafloc® or Zetag® series, at concentrations of less than 1% wt.

In short, the invention relates to the extraction of oils from waste drilling muds, or the cuttings fraction thereof, by treatment with an aqueous surfactant solution such that the oil is extracted as an o/w microemulsion. The microemulsion phase is separated from the cuttings by a suitable technique such as centrifugation. The residual microemulsion is washed out by an aqueous rinse.

The following examples are presented to demonstrate the technology in operation. In the following examples, waste muds or cuttings fractions were treated using the following procedure.
1 A fixed weight of cuttings was slurried with a fixed weight of a water + (SDS/B) mixture (e.g. of composition A), leading to microemulsification of the oil fraction. For maximum efficiency the cuttings: surfactant solution ratio was such that the final microemulsion composition corresponded to a point within the oil-in-water microemulsion realm (e.g. point C in Figure 1(a)).
2 The microemulsion and cuttings were separated by centrifugation.
3 The residual o/w microemulsion in the cuttings was removed by rinsing with water, followed by centrifugation to separate the cuttings and the 'dilute' microemulsion phase. In terms of the phase diagram, dilution corresponds to transfer from point C to point D in Figure 1(a).

### EXAMPLES

### Sample 1: Shale cuttings returned from a North Sea drilling rig. Cuttings comprised circa 3% water, 7% oil, and 90% solids.

Extraction procedure: 60g (+/-0.5g) samples of oil contaminated drill cuttings were weighed into clean dry polycarbonate centrifuge bottles. 60g of aqueous surfactant solution comprising 24g water, 18g SDS, and 18g B was added to each sample and the samples were mixed in an orbital shaker at 300 rpm, for 5 minutes at 25°C. The samples were then centrifuged in an MSE Coolspin swing out rotor centrifuge at 1000 rpm for a period of 10 minutes. The O/W microemulsion was decanted off and 100 mls of 0.5M NaCl was added to each sample. Again the samples were shaken at 300 rpm for 5 minutes at 25°C followed by centrifugation at 1000 rpm for 10 minutes. The "dilute" microemulsion was decanted leaving cleaned samples. The rinsing process was repeated.

Solids oil assay: Following treatment 50g (+/-0.5g) of recovered samples were weighed into retort chambers and the samples were retorted to 500°C for 45 minutes as outlined in the international retort standard procedure API Recommended Practice RP13B - Standard Procedure for Field Testing Oil-Based Drilling Fluids (Guidelines for sampling, analysis and calculation of oil on cuttings). Results were expressed as grams of oil per kilogram of dry retorted solids and were then calculated as % oil content by weight dry cuttings.

The data are summarised in Table 1. The final oil content of the cuttings was 0.54% by weight.

**Table 1**

| Summary of Statistics for Sample 1 at each treatment step | | | | | | | | |
|---|---|---|---|---|---|---|---|---|
| Steps | No | n | Mean oil Cont (%) | Range | St Dev | % St Dev | 95% L.C.L. | 95% U.C.L. |
| Sample 1 | 0 | 12 | 6.12 | 4.66 - 7.34 | 0.74 | 12.09 | 5.66 | 6.59 |
| first surfactant wash | 1 | 4 | 14.26 | 12.13-19.50 | 3.52 | 24.68 | 8.67 | 19.86 |
| first water rinse | 2 | 6 | 1.15 | 0.63 -1.45 | 0.29 | 25.22 | 0.84 | 1.45 |
| Second water rinse | 3 | 4 | 0.54 | 0.16-0.89 | 0.3 | 55.56 | 0.06 | 1.02 |

In order to directly compare the effectiveness of the oil extraction by o/w microemulsification vs. straightforward surfactant washing, the above experiment was repeated exactly, except that an aqueous surfactant solution comprising 24g 0.5 mol per litre aqueous sodium chloride solution, and 36g Triton® R100, place of 18g SDS and 18g B. Triton® R101 is commonly used as a cleaning agent in the oil- and metallurgy industries; however, it is not a microemulsion-forming surfactant.

The data show that this system was far less efficient at oil-extraction compared with the microemulsion-forming system of the invention.

### Sample 2 Treatment of homogenised cuttings returned from a North Sea drilling rig. Sample comprised circa 10% water, 20% oil, and 70% solids by weight.

**Table 2**

| Steps | No | n | Mean Oil Cont (%) | Range | St Dev | % St Dev | 95% L.C.L. | 95% U.C.L. |
|---|---|---|---|---|---|---|---|---|
| Sample 1 | 0 | 12 | 6.12 | 4.66 - 7.34 | 0.74 | 12.09 | 5.66 | 6.59 |
| first surfactant wash | 1 | 6 | 6.86 | 5.11 - 8.00 | 1.27 | 18.51 | 5.53 | 8.19 |
| first water rinse | 2 | 6 | 3.66 | 3.14 - 4.22 | 0.45 | 12.23 | 3.21 | 4.16 |
| Second water rinse | 3 | 6 | 3.05 | 2.52 -3.27 | 0.28 | 9.18 | 2.75 | 3.34 |

Two cycles of treatment (one wash with surfactant solution 60g (60mls) of aqueous surfactant solution comprising 24g water, 18g SDS, and 18g B and two water rinses) were used to remediate this sample. Data are given in Table 3. The final oil content of the recovered solids was 0.90% wt.

**Table 3**

| Summary of Statistics for Sample 2 at each treatment step | | | | | | | | |
|---|---|---|---|---|---|---|---|---|
| Steps | No | n | Mean Oil Cont (%) | Range | St Dev - | % St Dev | 95% L.C.L. | 95% U.C.L. |
| Sample 2 | 0 | 12 | 20.94 | 15.97-23.49 | 2.51 | 12.25 | 18.89 | 22.08 |
| first surfactant wash | 1 | 4 | 16.35 | 16.08 -16.74 | 0.31 | 1.9 | 15.87 | 16.84 |
| first water rinse | 2 | 4 | 3.59 | 2.60 - 4.70 | 0.9 | 25.07 | 2.15 | 5.03 |
| Second water rinse | 3 | 4 | 2.65 | 1.86 - 3.53 | 0.68 | 25.66 | 1.56 | 3.74 |
| Second surfactant wash | 4 | 4 | 11.61 | 8.91 - 12.53 | 1.8 | 15.5 | 8.75 | 14.48 |
| first water rinse | 5 | 4 | 1.46 | 0.6 - 2.05 | 0.61 | 41.78 | 0.48 | 2.43 |
| Second water rinse | 6 | 2 | 0.9 | 0.79 - 1.0 | 0.15 | 16.67 | -0.44 | 2.23 |

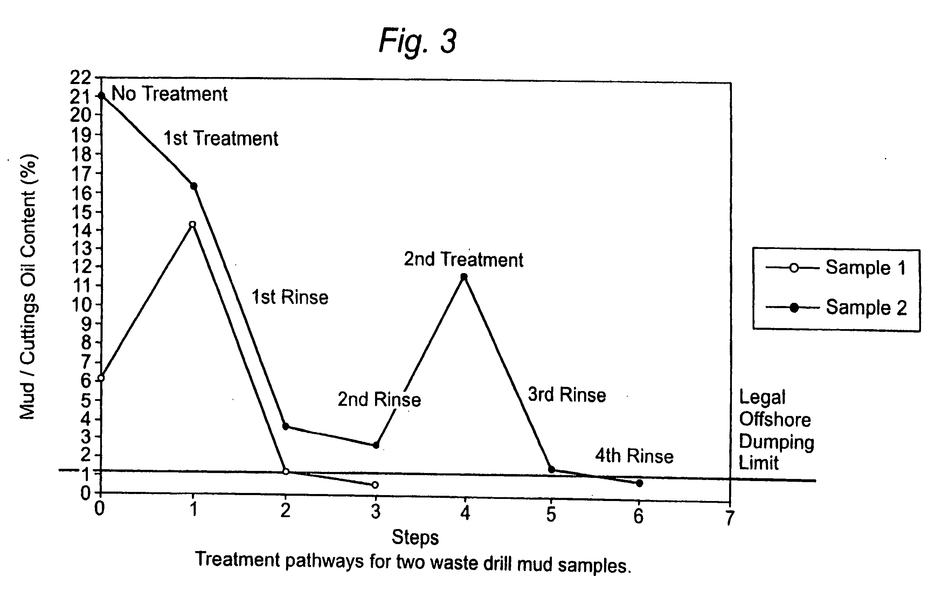

The change in the oil content of the solids following each step of the process is summarised in Figure 3. The results prove that waste drilling muds, or cuttings fractions thereof, may be remediated by use of this technology to residual oil contents of less than 1% wt. The apparent increases in oil content following the aqueous surfactant wash was due to the presence of the butan-1-ol component of residual o/w microemulsion, as confirmed by gas chromatography.

It was necessary to treat Sample 2 twice because this sample contained a high water and oil content (circa 10% wt and 21% wt respectively). Therefore the surfactant solution was greatly diluted on addition, resulting in a correspondingly reduced oil absorption capacity.

The microemulsion fractions can be treated to recover the oil-phase, preferably by increasing the temperature. For ionic surfactants, this results in a phase separation which yields an upper phase containing the oil and virtually no surfactant, and a lower phase of aqueous surfactant. The aqueous surfactant phase can be recycled for another round of cuttings treatment; the recovered oil phase is of a quality suitable for re-use as drill mud fluid, or for any other desired application.

The ability to flocculate fines using commercially available flocculating agents already in use in the oil-industry is particularly important for recycling, since the addition of flocculating agents to the aqueous surfactant solution will inhibit the accumulation of fines which would other wise limit the number of recycles considerably.

In a preferred embodiment, the invention extends to the cleaning of drill cuttings and other oil-contaminated solid wastes use aqueous solutions containing a single surfactant, rather than surfactant/cosurfactant mixture.

The ability of surfactants to stabilise microemulsions without the need for a co-surfactant is clear in the art. Thus sodium bis 2-ethylhexyl sulphosuccinate (Aerosol-OT) and didodecyltrimethyl ammonium bromide (DDAB) both form water-in-oil (w/o) microemulsions without the need for co-surfactant.

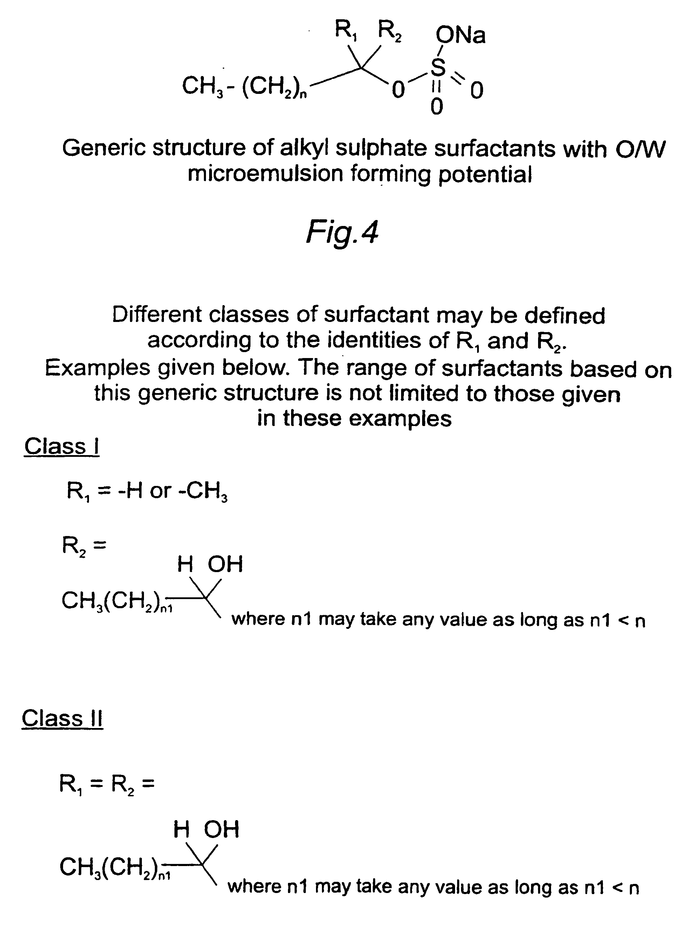

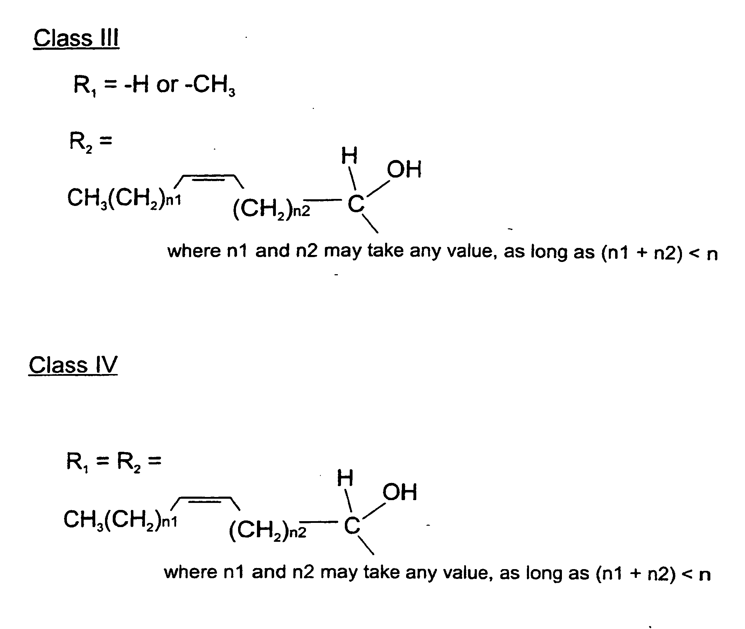

Surfactant molecules which in the absence of a cosurfactant form o/w microemulsions are not available commercially. Figure 4 describes as generic group of surfactants which have structural properties which are expected to stabilise o/w microemulsions without the need for a co-surfactant.

These surfactants are substituted alkyl sulphates where R₁ and R₂ are straight- or branched- chain hydrocarbons or substituted hydrocarbons. R₁ and R₂ are not necessarily identical. The number of carbon units, n, in each chain is variable. The examples in Figure 4 are presented to illustrate the range of structures claimed as surfactants with o/w microemulsion forming properties. The total range of structures is not limited to these.

The process of the invention represents a significant improvement over the prior art since it teaches that the oil content can be reduced to less than 1% wt. Furthermore this invention uses an oil-in-water microemulsion (that is a water-continuous microemulsion preparation) rather than a water-in-oil microemulsion (that is an oil continuous microemulsion preparation). In attaining residual oil contents of less than 1% wt, this invention represents a significant advance in oil extraction technology.

In summary the invention provides a method whereby oil can be recovered from waste drilling muds, or fractions thereof derived by prior separation processes, by extraction as an oil-in-water microemulsion.

The surfactant formulation employed in the method of the invention can includes any o/w microemulsion-forming surfactant, or mixture of surfactants, including, but not limited to, those described herein. The surfactant may be cationic, non-ionic or anionic in nature; anionic surfactants are not limited to the class of alkylsulphates described herein.

The surfactant formulation may include a component which behaves as a co-surfactant, that is enhancing, or otherwise modulating, the o/w microemulsion-forming properties of the surfactant. The surfactant formulation may also contain any substance or substances which would cause solids in colloidal suspension to flocculate (flocculating agents). In another embodiment, the surfactant formulation can contain dissolved salts of any description, at any concentration.

The invention therefore provides:
- a process technology whereby the invention is applied with physical separation of the o/w microemulsion phase and cleaned solids by centrifugation, filtration or any other suitable process.
- a process technology which is used for the recycling of waste drilling muds, or fractions thereof, including cuttings fractions derived from waste muds.
- a process technology which is used for the recycling of waste drilling muds or fractions thereof, where the original mud composition is of any formulation, and the oil is of mineral or synthetic origin, and may be hydrocarbon or non-hydrocarbon in nature.
- a process technology which can be applied for the remediation of waste drilling muds or fractions thereof in an on- or off-shore environment.
- a process technology which utilises any suitable method for recovering the oil from the o/w microemulsion phase, including but not limited to, a temperature-induced phase separation.
- a process technology which can be applied to the extraction of any kind of hydrocarbon or other petrochemical from any oil-contaminated material including, but not limited to, sand, soils and swarf contaminated with oil-based cutting fluids, generated in metal fabrication.

The present invention has many advantages which include:
- The process technology does not require sophisticated plant or other equipment. The initial microemulsification step can be achieved by slurrying the surfactant preparation with drilling mud, or cuttings fractions at ambient temperature, followed by centrifugal separation. Centrifugation is a commonly used technique within the oil industry in both the on- and off-shore environment. The rinsing step and final separation can be achieved similarly. The recovery of the oil from the o/w microemulsion can similarly be achieved by straightforward means. A feature of the invention is that phase separation leading to recovery and recycling of aqueous surfactant and oil phases can be achieved through a modest increase in temperature.
- The invention requires commodity inexpensive materials. Apart from water and possibly salt, the only addition required is surfactant and possibly co-surfactant and possibly flocculant. Accordingly, the surfactant can be recycled with minimal losses per cycle.
- This invention, which teaches that oil can be extracted from waste drilling muds, or fractions thereof, into an o/w microemulsion, is significantly more effective than that achieved by washing with a water-in-oil w/o microemulsion. Specifically, the extraction efficiency obtained with O/W microemulsion is typically six- to ten-times greater than that taught for the W/O microemulsion-based separation.
- Furthermore, the o/w microemulsion-based separation system has a unique advantage over the W/O microemulsion-based separation in that flocculants may be included in this water-based formulation. Addition of flocculant to a W/O microemulsion-based formulation cannot confer any specific benefit since flocculants are inactive in oil-based media.

## Claims

1. A method for the extraction of oil from waste drilling mud or waste drill mud cuttings comprising an oil fraction and a particulate fraction comprising mixing the waste drill mud cuttings with a water-based solution of a surfactant, absorbing the oil fraction from the particulate fraction with the surfactant, forming a single-phase Winsor IV oil-in-water (o/w) microemulsion from the surfactant and the oil fraction and separating the single-phase Winsor IV o/w microemulsion and the particulate fraction.

2. A method as claimed in Claim 1 further comprising the step of rinsing the particulate fraction with an aqueous solution.

3. A method as claimed in Claim 2 **characterised in that** the aqueous solution comprises an aqueous salt solution.

4. A method as claimed in any of Claims 1 to 3 **characterised in that** the single-phase Winsor IV o/w microemulsion and the particulate fraction are separated by centrifugation.

5. A method as claimed in any of claims 1 to 4 **characterised in that** the surfactant comprises a single-phase Winsor IV o/w microemulsion-forming surfactant.

6. A method as claimed in any of claims 1 to 5 **characterised in that** the aqueous surfactant solution comprises water and a salt.

7. A method as claimed in Claim 6 **characterised in that** the salt comprises sodium chloride.

8. A method as claimed in any of claims 1 to 7 **characterised in that** the water-based solution of a surfactant further comprises a co-surfactant.

9. A method as claimed in any of claims 1 to 8 **characterised in that** the water-based solution of a surfactant further comprises a flocculating agent.

10. A method as claimed in any of claims 1 to 9 **characterised in that** the extraction steps are carried out at ambient temperature or below.

11. A method as claimed in any of claims 1 to 10 **characterised in that** the oil is recovered from the single-phase Winsor IV o/w microemulsion.

12. A method as claimed in claim 11 **characterised in that** the oil is recovered by temperature-induced phase separation.

## Patentansprüche

1. Ein Verfahren zum Extrahieren von Öl aus Bohrschlammabfall oder Bohrgutabfall, der einen Ölanteil und einen Feststoffanteil beinhaltet, das das Mischen des Bohrgutabfalls mit einer TensidLösung auf Wasserbasis, das Absorbieren des Ölanteils aus dem Feststoffanteil mit dem Tensid, das Bilden einer einphasigen Winsor IV Öl-in-Wasser-Mikroemulsion (O/W-Mikroemulsion) aus dem Tensid und dem Ölanteil und das Trennen der einphasigen Winsor IV OIW-Mikroemulsion und dem Feststoffanteil beinhaltet.

2. Verfahren gemäß Anspruch 1, das ferner den Schritt des Spülens des Feststoffanteils mit einer wässrigen Lösung beinhaltet.

3. Verfahren gemäß Anspruch 2, **dadurch gekennzeichnet, dass** die wässrige Lösung eine wässrige Salzlösung beinhaltet.

4. Verfahren gemäß einem der Ansprüche 1 bis 3, **dadurch gekennzeichnet, dass** die einphasige Winsor IV O/W-Mikroemulsion und der Feststoffanteil durch Zentrifugation getrennt werden.

5. Verfahren gemäß einem der Ansprüche 1 bis 4, **dadurch gekennzeichnet, dass** das Tensid ein einphasiges Winsor IV O/Wmikroemulsionbildendes Tensid beinhaltet.

6. Verfahren gemäß einem der Ansprüche 1 bis 5, **dadurch gekennzeichnet, dass** die wässrige Tensidlösung Wasser und Salz beinhaltet.

7. Verfahren gemäß Anspruch 6, **dadurch gekennzeichnet, dass** das Salz Natriumchlorid beinhaltet.

8. Verfahren gemäß einem der Ansprüche 1 bis 7, **dadurch gekennzeichnet, dass** die Tensidlösung auf Wasserbasis ferner ein Co-Tensid beinhaltet.

9. Verfahren gemäß einem der Ansprüche 1 bis 8, **dadurch gekennzeichnet, dass** die Tensidlösung auf Wasserbasis ferner ein Flockungsmittel beinhaltet.

10. Verfahren gemäß einem der Ansprüche 1 bis 9, **dadurch gekennzeichnet, dass** die Extraktionsschritte bei Umgebungstemperatur oder darunter ausgeführt werden.

11. Verfahren gemäß einem der Ansprüche 1 bis 10, **dadurch gekennzeichnet, dass** das Öl aus der einphasigen Winsor IV O/W-Mikroemulsion wiedergewonnen wird.

12. Verfahren gemäß Anspruch 11, **dadurch gekennzeichnet, dass** das Öl durch temperaturinduzierte Phasentrennung wiedergewonnen wird.

## Revendications

1. Une méthode destinée à l'extraction d'huile de boue de forage résiduelle ou de déblais de boue de forage résiduelle comportant une fraction huile et une fraction particulaire comportant mélanger les déblais de boue de forage résiduelle à une solution à base d'eau d'un surfactant, absorber la fraction huile de la fraction particulaire avec le surfactant, former une microémulsion huile dans eau (h/e) Winsor IV à phase unique à partir du surfactant et de la fraction huile et séparer la microémulsion h/e Winsor IV à phase unique et la fraction particulaire.

2. Une méthode telle que revendiquée dans la revendication 1 comportant de plus l'étape de rincer la fraction particulaire avec une solution aqueuse.

3. Une méthode telle que revendiquée dans la revendication 2 **caractérisée en ce que** la solution aqueuse comporte une solution de sel aqueuse.

4. Une méthode telle que revendiquée dans n'importe lesquelles des revendications 1 à 3 **caractérisée en ce que** la microémulsion h/e Winsor IV à phase unique et la fraction particulaire sont séparées par centrifugation.

5. Une méthode telle que revendiquée dans n'importe lesquelles des revendications 1 à 4 **caractérisée en ce que** le surfactant comporte un surfactant de formation de microémulsion h/e Winsor IV à phase unique.

6. Une méthode telle que revendiquée dans n'importe lesquelles des revendications 1 à 5 **caractérisée en ce que** la solution de surfactant aqueuse comporte de l'eau et un sel.

7. Une méthode telle que revendiquée dans la revendication 6 **caractérisée en ce que** le sel comporte du chlorure de sodium.

8. Une méthode telle que revendiquée dans n'importe lesquelles des revendications 1 à 7 **caractérisée en ce que** la solution à base d'eau d'un surfactant comporte de plus un co-surfactant.

9. Une méthode telle que revendiquée dans n'importe lesquelles des revendications 1 à 8 **caractérisée en ce que** la solution à base d'eau d'un surfactant comporte de plus un agent de floculation.

10. Une méthode telle que revendiquée dans n'importe lesquelles des revendications 1 à 9 **caractérisée en ce que** les étapes d'extraction sont effectuées à température ambiante ou en dessous.

11. Une méthode telle que revendiquée dans n'importe lesquelles des revendications 1 à 10 **caractérisée en ce que** l'huile est récupérée dans la microémulsion h/e Winsor IV à phase unique.

12. Une méthode telle que revendiquée dans la revendication 11 **caractérisée en ce que** l'huile est récupérée par séparation de phase induite par la température.
